# EUROPEAN PATENT APPLICATION

(11) **EP 4 826 892 A1**
(43) Date of publication of application: **21.10.2026**
(21) Application number: 24903768.0
(22) Date of filing: 12.12.2024
(51) Int. Cl.: H01M 50/534, H01B 1/06, H01B 1/10, H01M 4/62, H01M 6/18, H01M 10/052, H01M 10/0562, H01M 10/0585, H01M 50/533

(54) **ALL-SOLID-STATE BATTERY**

(30) Priority: 13.12.2023 JP 2023209954
(71) Applicant: Maxell, Ltd., Kyoto 618-8525 (JP)
(72) Inventor: KOMURA, Yurika, Otokuni-gun, Kyoto 618-8525 (JP); FURUKAWA, Kazuki, Otokuni-gun, Kyoto 618-8525 (JP); OTSUKA, Takumi, Otokuni-gun, Kyoto 618-8525 (JP); HAN, Ryong-tae, Otokuni-gun, Kyoto 618-8525 (JP); MASUDA, Shumpei, Otokuni-gun, Kyoto 618-8525 (JP); TAKAICHI, Yuta, Otokuni-gun, Kyoto 618-8525 (JP)
(74) Representative: Diehl & Partner
(86) International application number: PCT/JP2024/044070
(87) International publication number: WO 2025/127115

(57) **Abstract**

In an all-solid-state battery including a sulfide-based solid-state-electrolyte and using a conductive porous sheet for connection between an electrode and a conductive path of an exterior body, internal resistance of the battery is reduced and increase of the internal resistance with time is prevented. The all-solid-state battery of the present invention is characterized in that it includes: an electrode stacked body having a positive electrode, a negative electrode, and a solid electrolyte layer; and an exterior body having the electrode stacked body sealed inside of the exterior body, wherein the exterior body has a conductive path extending from the inside to the outside, a porous metal substrate is interposed between the positive electrode and/or the negative electrode and a conductive path of the exterior body, at least one of the positive electrode, the negative electrode, and the solid electrolyte layer includes a sulfide-based solid electrolyte, the porous metal substrate is formed of an alloy containing Ni and Cr, a content of Ni in the alloy is 60 mass% or more, and a content of Cr in the alloy is 0.1 mass% or more and 40 mass% or less.

## Description

### Technical Field

The present invention relates to an all-solid-state battery using a sulfide-based solid electrolyte.

### Background Art

In association with the development of portable electronic devices such as mobile phones and notebook personal computers and the commercialization or the like of electric vehicles in recent years, there have been needs for small, lightweight, high capacity, and high energy density batteries.

In lithium batteries that can satisfy such needs at present, particularly in lithium-ion batteries, a lithium-containing composite oxide such as lithium cobalt oxide (LiCoO₂) or lithium nickel oxide (LiNiO₂) is used as a positive electrode active material, graphite or the like is used as a negative electrode active material, and an organic electrolyte solution containing an organic solvent and a lithium salt is used as a non-aqueous electrolyte.

Moreover, in association with the further development of devices to which the lithium-ion batteries are applied, there have been demands for a longer life, a higher capacity, and a higher energy density of the lithium-ion batteries, and much demands for the reliability of the lithium-ion batteries with a longer life, a higher capacity, and a higher energy density.

However, since the organic electrolyte solution used in each lithium-ion battery contains an organic solvent that is a flammable substance, the organic electrolyte solution could abnormally generate heat if an abnormality such as a short circuit occurs in the battery. Moreover, in association with an increase in an energy density of the lithium-ion batteries and a trend toward increase in an amount of the organic solvent in the organic electrolyte solution in recent years, there have been demands for higher reliability of the lithium-ion batteries.

Under the circumstances described above, an all-solid type lithium battery (all-solid-state battery) without an organic solvent has been considered. The all-solid type lithium battery includes a sheet or a molded body of a solid electrolyte without an organic solvent, instead of a conventional organic solvent-based electrolyte, and such a battery has no likelihood of abnormal heat generation of the solid electrolyte, and thus, exhibits high reliability.

As the solid electrolytes, sulfide-based solid electrolytes, hydride-based solid electrolytes, halide-based solid electrolytes, oxide-based solid electrolytes and the like have been studied. Among these, development of sulfide-based solid electrolytes has progressed rapidly due to their high lithium-ion conductivity, and an all-solid-state battery using a sulfide-based solid electrolyte in each of the positive electrode, negative electrode, solid electrolyte layer, has also been proposed (Patent Document 1).

On the other hand, in an all-solid-state battery, it has also been proposed to interpose a conductive porous member between an exterior body and an electrode in order to relieve stress applied to the electrode during sealing (Patent Document 2). Patent Document 2 refers to an example of the conductive porous member, which is a conductive porous sheet formed of a fiber of a carbon material or a molded body of graphite, and it is shown that its function can be stably maintained even when a solid electrolyte, such as a sulfide-based solid electrolyte that is easily reacted with other constituent materials in the battery, is used.

### Prior Art Document

### Patent Document

Patent Document 1: JP 2023-022836 A
Patent Document 2: WO 2020/66323

### Disclosure of Invention

### Problem to be Solved by the Invention

However, in the case where a conductive porous sheet formed of a carbon material is interposed, inside the exterior body, between an electrode and a conductive path extending from the inside of the exterior body to the outside such that the conductive porous sheet is used for electrical connection between the electrode and the conductive path, the electric resistance rises to a certain level, resulting in a problem that the internal resistance of the battery cannot be reduced any further. In the case where a conductive foamed substrate formed of copper or aluminum as described in Patent Document 2 is used as the conductive porous sheet, the internal resistance of the battery can be reduced immediately after the battery is assembled, but it has been found that the resistance gradually increases.

The present invention aims to reduce the internal resistance of an all-solid-state battery and to prevent increase of the internal resistance with time, where the all-solid-state battery uses a sulfide-based solid electrolyte and utilizes a conductive porous sheet for electrical connection between the electrode and the conductive path of the exterior body.

### Means for Solving Problem

An all-solid-state battery of the present invention includes an electrode stacked body having a positive electrode, a negative electrode, and a solid electrolyte layer; and an exterior body having the electrode stacked body sealed inside the exterior body, wherein the exterior body has a conductive path extending from the inside to the outside, a porous metal substrate is interposed between the positive electrode and/or the negative electrode and a conductive path of the exterior body, at least one of the positive electrode, the negative electrode, and the solid electrolyte layer includes a sulfide-based solid electrolyte, the porous metal substrate includes an alloy containing Ni and Cr, a content of Ni in the alloy is 60 mass% or more, and a content of Cr in the alloy is 0.1 mass% or more and 40 mass% or less.

### Effects of the Invention

The present invention can provide an all-solid-state battery containing a sulfide-based solid electrolyte having a low internal resistance and capable of suppressing increase of the internal resistance with time.

### Brief Description of Drawing

[FIG. 1] FIG. 1 is a cross-sectional view schematically illustrating an example of an all-solid-state battery of the present invention.
[FIG. 2] FIG. 2 is a perspective view of a recessed container of the all-solid-state battery of FIG. 1.
[FIG. 3] FIG. 3 is a perspective view of an elastic conductive member of the all-solid-state battery of FIG. 1.
[FIG. 4] FIG. 4 is a scanning electron micrograph for explaining the state of the surface of an electrode in an all-solid-state battery of the present invention.

### Description of the Invention

An all-solid-state battery of the present invention includes an electrode stacked body having a positive electrode, a negative electrode, and a solid electrolyte layer, and an exterior body having the electrode stacked body sealed inside the exterior body, wherein the exterior body has a conductive path extending from the inside to the outside, and at least one of the positive electrode, the negative electrode, and the solid electrolyte layer contains a sulfide-based solid electrolyte. The all-solid-state battery has a porous metal substrate interposed between the exterior body and at least one of the positive electrode and the negative electrode. That is, the all-solid-state battery has a porous metal substrate as a conductive connection member for electrically connecting at least one of the positive electrode and the negative electrode to the conductive path of the exterior body.

In the all-solid-state battery, the porous metal substrate in use is formed of an alloy containing Ni (nickel) and Cr (chromium) (hereinafter it may be referred to as "Ni-Cr alloy"), wherein the content of Ni in the alloy is 60 mass% or more and the content of Cr in the alloy is 0.1 mass% or more and 40 mass% or less.

Since Ni is highly conductive, connection of the electrode and the conductive path of the exterior body by use of a porous metal substrate formed of Ni can lower the resistance between the electrode and the conductive path, thereby reducing the internal resistance of the all-solid-state battery.

Further, since the porous metal substrate has voids and is made of a metal, application of force to the substrate in the thickness direction may easily ensure contact with the electrode and eliminate gaps caused by variations in thickness (height) of individual members, thereby further ensuring a conductive connection between the electrode and the conductive path. In particular, a foamed metal substrate can be easily plastically deformed. Therefore, in formation of an all-solid-state battery, the electrode stacked body is inserted into the exterior body by pressing the electrode stacked body to the porous metal substrate, or the electrode stacked body is pressed to the porous metal substrate by a pressing force of an elastic conductive member (described later), so that the porous metal substrate can be compressed and deformed in accordance with the level of variations (deviation from a design value) of the thickness (height) of the respective members. This allows for better contact with the electrode pressed on the porous metal substrate in the electrode stacked body, and also makes it possible to uniformize the degree of conductivity between the porous metal substrate and the electrode stacked body in each all-solid-state battery when manufacturing a large number of all-solid-state batteries. In the case where a porous metal substrate, particularly a foamed metal substrate is used in the all-solid-state battery, these effects make it possible to lower the internal resistance and to reduce variations in the respective internal resistances.

However, when the electrode mixture layer or the solid electrolyte layer of the electrode contains a sulfide-based solid electrolyte, a gas of sulfide such as hydrogen sulfide is generated in the battery, and the porous metal substrate is corroded by the gas, or the porous metal substrate is corroded by direct contact with the sulfide-based solid electrolyte, which can increase the internal resistance of the battery with time.

Therefore, in the all-solid-state battery of the present invention, the electrode and the conductive path in the exterior body are electrically connected by a porous metal substrate formed of an alloy containing Ni and Cr. In the porous metal substrate, corrosion caused by contact with the sulfide-based solid electrolyte or contact with gas derived from the sulfide-based solid electrolyte can be suppressed by the action of Cr.

In the meantime, in a porous metal substrate formed of an alloy containing Ni and Cr, Cr also has an action of decreasing the conductivity, thereby increasing the resistance.

Therefore, in the all-solid-state battery of the present invention, the content of Ni and the content of Cr in the alloy of Ni and Cr constituting the porous metal substrate as the conductive connection member are set to specific ranges, so that it is possible to achieve favorable conductivity and to suppress corrosion caused by the sulfide-based solid electrolyte, thereby allowing to lower initial internal resistance and suppress increase in internal resistance with time.

The all-solid-state batteries of the present invention include a secondary battery (all-solid-state secondary battery) and a primary battery (all-solid-state primary battery).

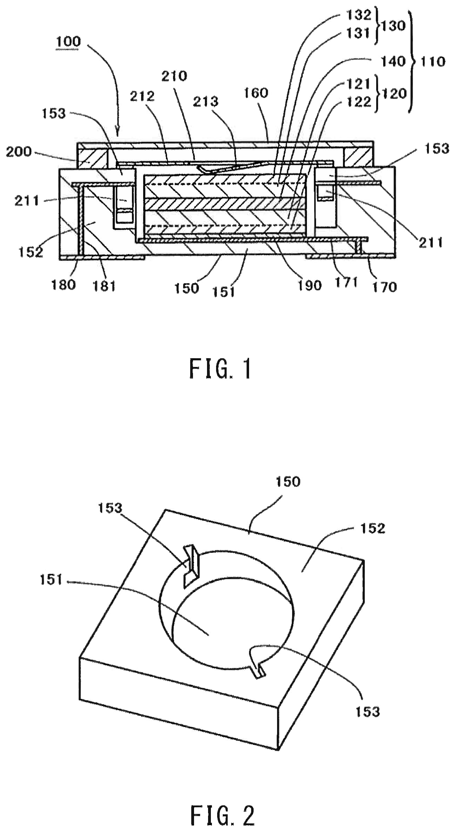

FIG. 1 is a longitudinal sectional view schematically showing an example of an all-solid-state battery according to the present invention. An all-solid-state battery 100 shown in FIG. 1 includes an electrode stacked body 110 having a positive electrode 120, a negative electrode 130, and a solid electrolyte layer 140 interposed therebetween, and the electrode stacked body 110 is sealed inside a battery container (exterior body) formed of a recessed container 150 and a sealing body 160.

FIG. 2 is a perspective view schematically showing the recessed container 150 constituting the battery container of the all-solid-state battery 100 shown in FIG. 1. As shown in FIG. 2, the recessed container 150 includes a bottom surface portion 151 and a side wall portion 152, and has a recessed cross-section with an opening on the upper side in the attached drawing.

The battery 100 shown in FIG. 1 is an example having a positive electrode 120 including a sheet-like metal substrate 122 as a current collector and a negative electrode 130 including a sheet-like metal substrate 132 as a current collector. That is, the positive electrode 120 has a positive electrode mixture layer 121 and a foamed metal substrate 122 similar to that used as the conductive connection member, and the whole of the foamed metal substrate 122 including the end portion facing the positive electrode mixture layer 121 is embedded in the surface layer portion of the positive electrode mixture layer 121. That is, the part at which the metal substrate 122 is provided corresponds as a whole to a region where both the positive electrode mixture layer and the metal substrate are present. Further, in the positive electrode 120, an end portion (lower end portion in FIG. 1) of the foamed metal substrate 122 opposite to the positive electrode mixture layer 121 is exposed. A dotted line in the positive electrode 120 indicates a boundary between a region in the positive electrode mixture layer 121 where the metal substrate is not present and a region where both the positive electrode mixture layer and the metal substrate are present, and which corresponds to an end portion of the metal substrate 122 facing the positive electrode mixture layer 121.

Similarly to the positive electrode 120, the negative electrode 130 also includes a negative electrode mixture layer 131 and a foamed metal substrate 132, and the whole of the foamed metal substrate 132 including the end portion facing the negative electrode mixture layer 131 is embedded in the surface layer portion of the negative electrode mixture layer 131. That is, the part at which the metal substrate 132 is provided corresponds as a whole to a region where both the negative electrode mixture layer and the metal substrate are present. Further, in the negative electrode 130, an end portion (upper end portion in FIG. 1) of the foamed metal substrate 132 opposite to the negative electrode mixture layer 131 is exposed. A dotted line in the negative electrode 130 indicates a boundary between a region in the negative electrode mixture layer 131 where the metal substrate is not present and a region where both the negative electrode mixture layer and the metal substrate are present, and which corresponds to an end portion of the metal substrate 132 facing the negative electrode mixture layer 131.

Connection terminal portions 170 and 180 for electrically connecting the all-solid-state battery 100 to a device in use are provided on the lower side of the recessed container 150 in the attached drawing. The connection terminal portion 170 is electrically connected to a conductive path 171 that extends from the inside of the recessed container 150 to the external connection terminal portion 170. The conductive path 171 is electrically connected to the positive electrode 120 of the electrode stacked body 110 to be housed in the recessed container 150, whereby the positive electrode 120 of the electrode stacked body 110 is electrically connected to the connection terminal portion 170. In the all-solid-state battery 100 of FIG. 1, a porous metal substrate 190 serving as a conductive connection member is interposed between the positive electrode 120 of the electrode stacked body 110 and the conductive path 171. As described above, by the action of the porous metal substrate 190, the all-solid-state battery 100 is capable of enhancing the conductivity between the positive electrode 120 and the conductive path 171 and suppressing variations in the internal resistance of respective batteries in the case of manufacturing the number of all-solid-state batteries.

Further, the connection terminal portion 180 is electrically connected to a conductive path 181 that extends from the inside of the recessed container 150 to the external connection terminal portion 180. The conductive path 181 is electrically connected to the negative electrode 130 via an elastic conductive member 210 that is disposed on the upper part of the electrode stacked body 110, as shown in the attached drawing, and is in contact with the negative electrode 130 of the electrode stacked body 110. In this way, the negative electrode 130 of the electrode stacked body 110 and the connection terminal portion 180 are electrically connected to each other.

The side wall portion 152 of the recessed container 150 has a supporting portion 153 for supporting the elastic conductive member 210. In the all-solid-state battery 100, as shown in FIG. 2, the supporting portion 153 is formed at the upper end portion of the inner peripheral surface of the side wall portion 152 and protruding in the radial direction. Alternatively, a supporting portion for holding the elastic conductive member of the all-solid-state battery may have any other shape as long as the supporting portion is capable of supporting the elastic conductive member 210.

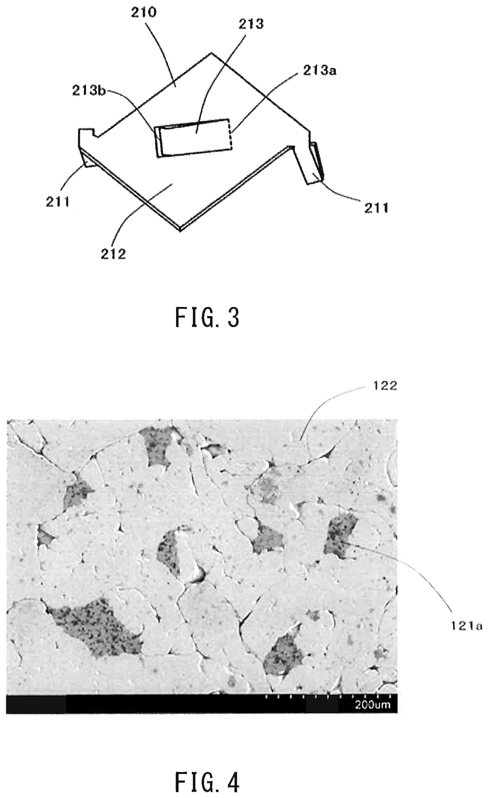

FIG. 3 is a perspective view schematically showing the elastic conductive member 210 of the all-solid-state battery 100 shown in FIG. 1. The elastic conductive member 210 includes, for example, a thin plate made of metal, and as shown in FIG. 3, it is rectangular in a plan view, or alternatively, it can be shaped in accordance with a plan view shape of an electrode stacked body or a recessed container of an all-solid-state battery.

The recessed container 150 of the all-solid-state battery 100 shown in FIG. 1 has a plurality of supporting portions 153 at the upper end of the side wall portion 152, for supporting the elastic conductive member 210. The supporting portions 153 are formed as protruding portions that protrude in the circumferential direction of the inner peripheral surface of the side wall portion 152. More specifically, the supporting portions 153 are top walls of a plurality of recesses formed radially outward on the inner peripheral surface of the side wall portion 152. And a part of the conductive path 181 is exposed on the lower surface and the side face of the top wall. The number of the supporting portions 153 to be formed is at least the number corresponding to the number of supported portions 211 of the elastic conductive member 210 described later.

The elastic conductive member 210 has the supported portions 211 and a flat portion 212. In a plan view, the supported portions 211 are provided to radially surround the electrode stacked body 110 of the all-solid-state battery 101, corresponding to the positions of the supporting portions 153. Each of the supported portions 211 is a hook-shaped locking piece locked to the lower surface of the top wall of the supporting portion 153, and extends from the edge of the elastic conductive member 210 toward the supporting portions 153 (downward in FIG. 1). The supported portion 211 has a tip that is folded back toward the supporting portion 153, namely, the lower surface of the top wall. The tip of the supported portion 211 is in contact with the conductive path 181 that is exposed on the lower surface and the side face of the top wall of the supported portion 153. In this way, the elastic conductive member 210 serves as a current collector and constitutes a part of a conductive path for electrically connecting the negative electrode 130 and the connection terminal portion 180.

The elastic conductive member 210 is supported by the supporting portions 153 formed on the inner peripheral surface of the side wall portion 152 of the recessed container 150, and covers a part of the opening of the recessed container 150. The area of the elastic conductive member 210 in a plan view is smaller than the opening area of the recessed container 150. Even when the hook-shaped locking piece of the elastic conductive member 210 is not locked to the lower surface of the top wall of the supporting portion 153, if the elastic conductive member 210 can be fixed in a state in which the hook-shaped locking piece is pressed into the recess formed in the inner peripheral surface of the side wall portion 152, the elastic conductive member 210 is locked to the side wall portion 152 of the recessed container 150.

As shown in FIGS. 1 and 3, the elastic conductive member 210 has a spring portion 213 that rises from the flat portion 212 toward the negative electrode 130 of the electrode stacked body 110, and the spring portion 213 is in contact with the upper surface of the negative electrode 130 of the electrode stacked body 110 (a foamed metal substrate 132 serving as a current collector thereof) in the attached drawing to press the electrode stacked body 110 toward the inner bottom surface of the recessed container 150.

In the elastic conductive member having the spring portion, the shape of the spring portion is not particularly limited as long as the electrode stacked body can be pressed toward the inner bottom surface of the recessed container. The spring portion 213 of the elastic conductive member 210 shown in FIGS. 1 and 3 is a spring piece inclined from the flat portion 212 toward the negative electrode 130 of the electrode stacked body 110 (hereinafter, the spring portion 213 may be referred to as a spring piece 213). As shown in FIG. 3, the spring piece 213 is formed by cutting out a part of the flat portion 212 into a U-shape, and is cantilevered by the flat portion 212. That is, the spring piece 213 of the elastic conductive member 210 shown in FIGS. 1 and 3 is a flat spring. The elastic conductive member 210 having such a configuration is not limited in particular as long as the spring piece 213 is formed at a part of the flat portion 212, so that the elastic conductive member can be manufactured more easily, and consequently, the all-solid-state battery can be manufactured more easily. Further, since the spring piece 213 is formed by cutting out the flat portion 212, the elastic conductive member, and consequently the all-solid-state battery can be manufactured more easily.

The spring piece 213 has a boundary 213a with the flat portion 212 and a tip portion 213b, and is bent at the boundary 213a to get contact with the negative electrode 130 of the electrode stacked body 110, and is inclined from the boundary 213a to the tip portion 213b toward the electrode stacked body 110. However, if the tip portion 213b of the spring piece 213 is brought into contact with the negative electrode 130 of the electrode stacked body 110, the negative electrode 130 may be scratched by the tip portion 213b. Therefore, in the elastic conductive member 210 shown in FIGS. 1 and 3, the spring piece 213 is bent so that the tip portion 213b is directed upward as shown in FIG. 2, whereby the spring piece 213 is brought into contact with the negative electrode 130 at a position other than the tip portion 213b.

In the elastic conductive member 210 before assembling the all-solid-state battery 100, the height from the bottom surface of the flat portion 212 to a part at which the spring piece 213 gets contact with the negative electrode 130 (the height of the spring piece 213) is greater than the height from the bottom surface of the flat portion 212 to the part at which the negative electrode 130 gets contact with the elastic conductive member 210 after assembling the all-solid-state battery 100. Thus, the electrode stacked body 110 can be pressed by the spring piece 213, and a favorable electrical connection between the elastic conductive member 210 and the negative electrode 130 of the electrode stacked body 110 can be maintained.

Further, in the elastic conductive member 210, the spring portion 213 is composed of a spring piece, whereby the thickness of the elastic conductive member 210 excluding the supported portion 211 can be reduced. For example, before assembling the all-solid-state battery 100, the thickness (overall height) of the elastic conductive member 210 excluding the supported portion 211 may be the sum of the thickness of the plate material constituting the flat portion 212 and the height of the spring piece 213. Specifically, the thickness of the elastic conductive member 210 excluding the supported portion 211 can be set to 0.7 mm as a sum of the thickness of 0.2 mm of the plate member and the height of 0.5 mm of the spring piece.

The spring piece 213 may have a length (a length from the boundary 213a to the tip portion 213b) of 3 mm, for example, and a width (the length in the direction perpendicular to the longitudinal direction) of 1.5 mm, for example. The elastic conductive member having the spring pieces may have a plurality of spring pieces. In this case, the shapes such as the widths and lengths of the spring pieces may be different from each other for preventing resonance, for example. The thickness of the elastic conductive member 210 excluding the supported portion 211 is preferably 1.2 mm or less, more preferably 1 mm or less, and particularly preferably 0.8 mm or less. In the meantime, in order to satisfactorily generate a pressing force on the spring portion 213, the thickness of the elastic conductive member 210 excluding the supported portion 211 is preferably 0.3 mm or more, more preferably 0.4 mm or more, and particularly preferably 0.5 mm or more.

Further, since the edge of the elastic conductive member 210, that is, the position of the supported portion 211 can be set freely in the height direction (the thickness direction of the elastic conductive member 210), even when a space is formed between the sealing body 160 and the elastic conductive member 210, the distance between the sealing body 160 and the part at which the sealing body 160 gets contact with the negative electrode 130 of the spring piece 213 is not increased. As a result, increase of gaps between the sealing body 160 and the electrode stacked body 110 can be prevented, whereby the capacity of the all-solid-state battery 100 can be increased. Here, the thickness direction of the elastic conductive member 210 is a vertical direction (the height direction of the all-solid-state battery 100) in FIG. 1, and may be a direction perpendicular to the bottom surface of the flat portion 212.

The overall thickness of the elastic conductive member 210 including the supported portions 211 can be appropriately set in accordance with the height of the side wall portion 152 of the recessed container 150 from the bottom surface portion 151. The supported portions 211 are not limited in particular as long as they have a height necessary to be locked to the supporting portions 153. The overall thickness of the elastic conductive member 210 including the supported portions 211 may be, for example, 3 mm or less, preferably 2.7 mm or less, and more preferably 2.5 mm or less.

In the elastic conductive member 210, the spring piece 213 may be formed by cutting out the flat portion 212 as described above, or may be attached by welding a separately-prepared spring piece 213 to the bottom surface of the flat portion 212. Alternatively, a base portion on which the spring piece 213 is to be attached is provided in advance, separate from the flat portion, and the spring piece 213 is attached to the base portion to make an entire spring portion. That is, the spring piece 213 may rise directly from the flat portion 212, or may rise from the flat portion 213 via another element such as a base portion interposed therebetween. Or, both ends of the spring piece 213 may be supported by the flat portion 212 so that the spring piece 213 protrudes toward the electrode stacked body 110.

In the all-solid-state battery 100 shown in FIG. 1, when setting the elastic conductive member 210, first, the electrode stacked body 110 is housed in the recessed container 150 and then placed on the upper surface of the electrode stacked body 110. With the elastic conductive member 210 placed on the upper surface of the electrode stacked body 110, the tip of the supported portion 211 is positioned between the upper surface of the electrode stacked body 110 and the supporting portions 153, i.e., the lower surface of the top wall, in the axial direction (vertical direction in FIG. 1) of the electrode stacked body 110. While pushing the supported portion 211 of the elastic conductive member 210 into the bottom surface 151 of the recessed container 150, the supported portion 211 is supported by the supporting portion 153. More specifically, the tip of the supported portion 211 is engaged with the supporting portion 153, that is, the lower surface of the top wall. Since the supported portions 211 are pressed downward, the spring piece 213 of the elastic conductive member 210 is pressed in a direction opposite to the negative electrode 130, in the state where the spring piece 213 is in contact with the electrode stacked body 110. At this time, the spring piece 213 presses the electrode stacked body 110 toward the bottom surface 151 of the recessed container 150 by its elastic force. As a result, the elastic conductive member 210 can more stably be in contact with the electrode stacked body 110 and maintain a favorable electrical connection without causing a displacement that is caused by vibration or the like.

In the all-solid-state battery 100 shown in FIG. 1, the recessed container 150 has two supporting portions 153, 153, but the number of the supporting portions 153 may be three or more. The supported portions 211 of the elastic conductive member 210 may be formed in accordance with the number of the supporting portions 153.

An example of a method of fixing the edge (supported portions 211) of the elastic conductive member 210 to the inner peripheral surface of the side wall portion 152 of the recessed container 150, a method of bonding the edge of the elastic conductive member 210 to the inner peripheral surface of the side wall portion 152 of the recessed container 150.

As shown in FIG. 1, a gap is preferably formed between the elastic conductive member 210 and the sealing body 160. That is, the elastic conductive member 210 and the sealing body 160 preferably are not in contact with each other. Thus, even if the elastic conductive member 210 is pushed toward the sealing body 160 due to the volume change of the electrode stacked body 110, contact between the elastic conductive member 210 and the sealing body 160 can be avoided.

In the all-solid-state battery 100 shown in FIG. 1, the electrode stacked body 110 is disposed so that the positive electrode 120 is positioned closer to the inner bottom surface of the recessed container 150 and the negative electrode 130 is positioned closer to the sealing body 160 (elastic conductive member 210). Alternatively, the all-solid-state battery can be constituted by disposing the electrode stacked body so that the negative electrode is positioned closer to the inner bottom surface of the recessed container and the positive electrode is positioned closer to the sealing body (closer to elastic conductive member).

### <Porous metal substrate>

A porous metal substrate may be interposed either between the positive electrode and the conductive path for positive electrode in the exterior body, or between the negative electrode and the conductive path for negative electrode in the exterior body, or it may be interposed in both of them.

As described above, the porous metal substrate is pushed by the electrode stacked body to be pressed against the conductive path on the inner surface of the exterior body, thereby making the conductive connection between the electrode and the conductive path more reliable. Furthermore, in the case where the porous metal substrate is a foamed substrate, it may easily deformed plastically to exhibit more favorably an action of lowering the internal resistance of the battery and an action of suppressing variation of the internal resistance among a plurality of batteries. In this case, like the all-solid-state battery shown in FIG. 1, a member (elastic conductive member in FIG. 1) for pressing the electrode stacked body toward the inner surface of the exterior body (recessed container) is preferably disposed on either one of the positive electrode and the negative electrode of the electrode stacked body, and thus, the porous metal substrate is typically interposed between the outermost electrodes (either the positive electrode or the negative electrode) of the electrode stacked body and the conductive path of the exterior body. Depending on the choice of the internal structure of the all-solid-state battery, the porous metal substrate may be interposed between the positive electrode and the conductive path for positive electrode in the exterior body, and also between the negative electrode and the conductive path for negative electrode in the exterior body.

The porous metal substrate is formed of an alloy containing Ni and Cr. The content of Ni in the alloy is 60 mass% or more, preferably 70 mass% or more, and more preferably 80 mass% or more from the viewpoint of improving the conductivity of the porous metal substrate, lowering the resistance in the conductive connection between the electrode and the conductive path in the exterior body, and lowering the internal resistance of the all-solid-state battery.

The content of Cr in the alloy is 0.1 mass% or more, preferably 3 mass% or more, and more preferably 10 mass% or more from the viewpoint of suppressing corrosion of the porous metal substrate and suppressing increase with time of internal resistance of the all-solid-state battery, where the corrosion of the porous metal substrate is caused by reaction with, for example, the sulfide-based solid electrolyte or with a gas generated from the sulfide-based solid electrolyte. However, if the content of Cr in the alloy is too large, the conductivity of the porous metal substrate deteriorates to increase the internal resistance of the battery. In addition to that, the hardness of the porous metal substrate increases and plastic deformation becomes difficult, making it difficult to adjust the variations in thickness (height) of the respective members. Therefore, the content of Cr in the alloy is 40 mass% or less, preferably 30 mass% or less, and more preferably 20 mass% or less.

As can be seen from the content of Ni and the content of Cr in the alloy constituting the current collector, the composition of the alloy constituting the porous metal substrate typically includes Cr at the above content and the remainder is Ni, but may include elements other than Ni and Cr (for example, Sn, Fe, Co, Ti, Al, and Mo) at a total content of 39.9 mass% or less. That is, in the composition of the alloy constituting the porous metal substrate, the total content of Ni and Cr is 60.1 mass% or more, and elements other than Ni and Cr may be contained in a range of 39.9 mass% or less.

Examples of the porous metal substrate include a punched metal, a net, and an expanded metal, but it is preferable to use a foamed metal substrate formed of an alloy of the above-mentioned composition (such as "Celmet (registered trademark)" manufactured by Sumitomo Electric Industries, Ltd.) because it is plastically deformed relatively easily.

The thickness of the porous metal substrate after the all-solid-state battery is assembled is preferably 20 µm or more, and more preferably 100 µm or more, from the viewpoint of ensuring a better action thereof. The upper limit value of the thickness of the porous metal substrate after the all-solid-state battery is assembled is not particularly limited, but it is preferably 500 µm or less, and more preferably 300 µm or less, from the viewpoint of controlling or decreasing the volume of components not involved in power generation in the exterior body.

The thickness of the porous metal substrate is determined by the maximum value of the width in the thickness direction of an image obtained in observation of a section in the thickness direction with a scanning electron microscope (SEM) at a magnification of 50 to 1000× (the respective values in Examples described below are obtained by these methods).

As described above, the foamed metal substrate is preferably housed in the battery (in the exterior body) in a state of being compressed in the thickness direction, and its thickness in the battery is preferably 90% or less, more preferably 80% or less of the thickness before use (thickness before compression). Therefore, the thickness of the foamed metal substrate before use in the battery (before compression) is preferably 100 to 3000 µm.

The porosity of the foamed metal substrate before use in the battery (before compression) is preferably 99.5% or less, more preferably 99% or less, and even more preferably 98.5% or less, from the viewpoint of further facilitating plastic deformation by pressing the electrode stacked body, thereby more reliably ensuring the effect of reducing the internal resistance of the all-solid-state battery and the effect of suppressing the variation thereof, while it is preferably 80% or more, more preferably 90% or more, and even more preferably 95% or more from the viewpoint of ensuring sufficient strength for use.

In addition, if the weight per square meter ("metsuke") of the porous metal substrate (especially the foamed metal substrate) is too large, the resistance or the hardness of the porous metal substrate increases, and the porous metal substrate is unlikely to be plastically deformed, thereby reducing the effect of reducing the internal resistance of the battery. Therefore, from the viewpoint of more reliably ensuring the effect of lowering the internal resistance of the battery, the weight per square meter is preferably 600 g/m² or less, and more preferably 400 g/m² or less. The weight per square meter of the porous metal substrate (especially the foamed metal substrate) is desirably 200 g/m² or more, since extremely small weight per square meter can raise the electric resistance of the substrate and the internal resistance of the battery.

### <Electrode stacked body>

An electrode stacked body of an all-solid-state battery includes a positive electrode, a negative electrode, and a solid electrolyte layer, where the solid electrolyte layer is interposed between the positive electrode and the negative electrode.

### (Positive electrode)

A positive electrode can be, for example, a molded body (pellet or the like) formed by molding a positive electrode mixture containing a positive electrode active material, or a structure having a layer (positive electrode mixture layer) formed of a positive electrode mixture on one or both surfaces of a current collector.

In the case where the all-solid-state battery is a primary battery, the positive electrode active material can be the same as the positive electrode active material for use in a conventionally known non-aqueous electrolyte primary battery or the like. Specific examples of the positive electrode active material include: manganese dioxide; lithium-containing manganese oxides [for example, LiMn₃O₆ and a complex oxide that has the same crystal structure as manganese dioxide, such as the β type structure, the y type structure, or the β type and y type mixture structure, and contain Li in an amount of 3.5 mass% or less, preferably 2 mass% or less, more preferably 1.5 mass% or less, and particularly preferably 1 mass% or less]; lithium-containing complex oxides such as LiₐTi_{5/3}O₄ (4/3 ≤ a < 7/3); vanadium oxides; niobium oxides; titanium oxides; sulfides such as iron (II) sulfide; graphite fluorides; silver sulfides such as Ag₂S; and, nickel oxides such as NiO₂.

In the case where the all-solid-state battery is a secondary battery, the positive electrode active material can be the same as the positive electrode active material for use in a conventionally known non-aqueous electrolyte secondary battery or the like. Specific examples of the positive electrode active material include: spinel-type lithium manganese complex oxides represented by Li₁₋ₓMᵣMn₂₋ᵣO₄ (where M is at least one element selected from the group consisting of Li, Na, K, B, Mg, Ca, Sr, Ba, Ti, V, Cr, Zr, Fe, Co, Ni, Cu, Zn, Al, Sn, Sb, In, Nb, Ta, Mo, W, Y, Ru, and Rh, and x and r satisfy 0 ≤ x ≤ 1, and 0 ≤ r ≤ 1, respectively); layered compounds represented by LiᵣMn₍₁₋ₛ₋ₜ₎NiₛMₜO₍₂₋ᵤ₎Fᵥ (where M is at least one element selected from the group consisting of Co, Mg, Al, B, Ti, V, Cr, Fe, Cu, Zn, Zr, Mo, Sn, Ca, Sr, and W, and r, s, t, u, and v satisfy 0 ≤ r ≤ 1.2, 0 < s < 0.5, 0 ≤ t ≤ 0.5, u + v < 1, -0.1 ≤ u ≤ 0.2, and 0 ≤ v ≤ 0.1, respectively); lithium cobalt complex oxides represented by Li₁₋ₓCo₁₋ᵣMᵣO₂ (where M is at least one element selected from the group consisting of Al, Mg, Ti, V, Cr, Zr, Fe, Ni, Cu, Zn, Ga, Ge, Nb, Mo, Sn, Sb, and Ba, and x and r satisfy 0 ≤ x ≤ 1 and 0 ≤ r ≤ 0.5, respectively); lithium nickel complex oxides represented by Li₁₋ₓNi₁₋ᵣMᵣO₂ (where M is at least one element selected from the group consisting of Al, Mg, Ti, Zr, Fe, Co, Cu, Zn, Ga, Ge, Nb, Mo, Sn, Sb, and Ba, and x and r satisfy 0 ≤ x ≤ 1 and 0 ≤ r ≤ 0.5, respectively); olivine-type complex oxides represented by Li₁₊ₛ₋ₓM₁₋ᵣNᵣPO₄Fₛ (where M is at least one element selected from the group consisting of Fe, Mn, and Co while N is at least one element selected from the group consisting of Al, Mg, Ti, Zr, Ni, Cu, Zn, Ga, Ge, Nb, Mo, Sn, Sb, V, and Ba, and x, r, and s satisfy 0 ≤ x ≤ 1, 0 ≤ r ≤ 0.5, and 0 ≤ s ≤ 1, respectively); and pyrophosphoric acid compounds represented by Li₂₋ₓM₁₋ᵣNᵣP₂O₇ (where M is at least one element selected from the group consisting of Fe, Mn, and Co, while N is at least one element selected from the group consisting of Al, Mg, Ti, Zr, Ni, Cu, Zn, Ga, Ge, Nb, Mo, Sn, Sb, V, and Ba, and x and r satisfy 0 ≤ x ≤ 2, and 0 ≤ r ≤ 0.5, respectively). These compounds may be used alone or in combination of two or more thereof.

In the case where the all-solid-state battery is a secondary battery, the average particle size of the positive electrode active material is preferably 1 µm or more, more preferably 2 µm or more, while it is preferably 10 µm or less, and more preferably 8 µm or less. The positive electrode active material may be primary particles or secondary particles of aggregated primary particles. When a positive electrode active material having an average particle size within the above range is used, the interface between the positive electrode active material and the solid electrolyte contained in the positive electrode can be increased, and thus, the output characteristics of the battery are further improved.

Herein, the average particle size of the various particles (such as positive electrode active material and solid electrolytes) means the value of the diameter corresponding to the volume-based cumulative frequency of 50% (D₅₀) in the case where the cumulative volume of particles, starting from smaller sizes, is determined using a particle size distribution measuring device, e.g., a Microtrac particle size distribution analyzer "HRA9320" manufactured by Nikkiso Co., Ltd.

In the case where the all-solid-state battery is a secondary battery, the positive electrode active material preferably has a reaction suppressing layer on its surface for suppressing a reaction with the solid electrolyte contained in the electrode.

When the positive electrode active material and the solid electrolyte are brought into direct contact with each other in the molded body of the positive electrode mixture or in the positive electrode mixture layer, the solid electrolyte is oxidized to form a resistance layer, whereby the ion conductivity in the molded body of the positive electrode mixture or in the positive electrode mixture layer may be degraded. By providing a reaction suppressing layer on the surface of the positive electrode active material in order to suppress the reaction with the solid electrolyte thereby preventing the direct contact between the positive electrode active material and the solid electrolyte, it is possible to suppress the degradation of the ion conductivity due to the oxidation of the solid electrolyte in the molded body of the positive electrode mixture and in the positive electrode mixture layer.

The reaction suppressing layer is not limited in particular as long as it is formed of a material having ion conductivity and capable of suppressing the reaction between the positive electrode active material and the solid electrolyte. Examples of the material that can constitute the reaction suppressing layer include oxides that contain Li and at least one element selected from the group consisting of Nb, P, B, Si, Ge, Ti, and Zr. The more specific examples include Nb-containing oxides such as LiNbO₃, and further, Li₃PO₄, Li₃BO₃, Li₂SO₄, Li₄SiO₄, Li₄GeO₄, LiTiO₃, LiZrO₃, and Li₂WO₄. The reaction suppressing layer may contain only one of these oxides, or it may contain two or more thereof. Furthermore, some of the oxides may form a complex compound. Among these oxides, the Nb-containing oxides are preferably used, and LiNbO₃ is used even more preferably.

Preferably, the reaction suppressing layer is present on the surface of the positive electrode active material in an amount of 0.1 to 1.0 part by mass with respect to 100 parts by mass of the positive electrode active material. The reaction suppressing layer within this range can suppress reliably the reaction between the positive electrode active material and the solid electrolyte.

Examples of methods for forming the reaction suppressing layer on the surface of the positive electrode active material include a sol-gel process, mechano-fusion, CVD, PVD, and ALD.

From the viewpoint of further increasing the energy density of the all-solid-state battery in which the electrode is used as the positive electrode, the content of the positive electrode active material in the positive electrode mixture is preferably 60 to 85 mass%.

The positive electrode mixture may contain a conductive assistant. Specific examples of the conductive assistant include carbon materials such as graphite (natural graphite or synthetic graphite), graphene, carbon black, carbon nanofibers, and carbon nanotubes. For example, in the case of using Ag₂S as the active material, conductive Ag is generated during the discharge reaction, and thus, a conductive assistant may be omitted. In the case where the positive electrode mixture contains the conductive assistant, the content of the conductive assistant is preferably 1.0 part by mass or more, while it is preferably 7.0 parts by mass or less, and more preferably 6.5 parts by mass or less, with respect to 100 parts by mass of the content of the positive electrode active material.

The positive electrode mixture may further contain a binder. Specific examples of the binder include fluorocarbon resins such as polyvinylidene fluoride (PVDF). In the case where a favorable moldability can be ensured for forming a molded body of the positive electrode mixture or a positive electrode mixture layer without using a binder, as in the case where a sulfide-based solid electrolyte is contained in the positive electrode mixture, the binder is not required in the positive electrode mixture.

In the case where a binder needs to be contained in the positive electrode mixture, the content of the binder is preferably 15 mass% or less and preferably 0.5 mass% or more. When moldability is obtained without a binder, the content of a binder in the positive electrode mixture is preferably 0.5 mass% or less, more preferably 0.3 mass% or less, and even more preferably 0 mass% (that is, the positive electrode mixture contains no binder).

The positive electrode mixture may contain a solid electrolyte. The solid electrolyte to be contained in the positive electrode mixture is not particularly limited as long as it has lithium ion conductivity, and for example, a sulfide-based solid electrolyte, a hydride solid electrolyte, a halide solid electrolyte, an oxide solid electrolyte and the like can be used. A sulfide-based solid electrolyte is desirably contained in the positive electrode mixture because it has high lithium ion conductivity.

Examples of the sulfide-based solid electrolytes include particles such as Li₂S-P₂S₅-based glass, Li₂S-SiS₂-based glass, Li₂S-P₂S₅-GeS₂-based glass, and Li₂S-B₂S₃-based glass. In addition to that, thio-LISICON-type solid electrolytes that attract attention in recent years due to their high Li-ion conductivity, and also sulfide-based solid electrolytes that have the argyrodite crystal structure (argyrodite-type solid electrolyte) can be used. {Here, the thio-LISICON-type solid electrolytes are solid electrolytes represented by a general formula Li_{12-12a-b+c+6d-e}M¹_{3+a-b-c-d}M²_{b}M³_{c}M⁴_{d}M⁵₁₂₋ₑXₑ, such as Li₁₀GeP₂S₁₂, Li_{9.54}Si_{1.74}P_{1.44}S_{11.7}Cl_{0.3} or the like (where M¹ is Si, Ge, or Sn, M² is P or V, M³ is Al, Ga, Y, or Sb, M⁴ is Zn, Ca, or Ba, M⁵ is S, or S and O, and X is F, Cl, Br, or I, and a, b, c, d, and e satisfy 0 ≤ a < 3, 0 ≤ b + c + d ≤ 3, and 0 ≤ e ≤ 3, respectively).}

Examples of the hydride-based solid electrolytes include LiBH₄, and a solid solution of LiBH₄ and the following alkali metal compound (for example, a solid solution having a mol ratio of LiBH₄ to an alkali metal compound of 1:1 to 20:1). Examples of the alkali metal compound in the solid solution include at least one selected from the group consisting of lithium halides (for example, LiI, LiBr, LiF, and LiCl), rubidium halides (for example, RbI, RbBr, RbF, and RbCl), cesium halides (for example, CsI, CsBr, CsF, and CsCl), lithium amide, rubidium amide, and cesium amide.

Examples of the halide-based solid electrolytes include monoclinic LiAlCl₄, defective-spinel-type or layered LiInBr₄, and monoclinic Li₆₋₃ₘYₘX₆ (where 0 < m < 2, and X = Cl or Br). In addition, the known halide-based solid electrolytes disclosed, for example, in WO 2020/070958 and WO 2020/070955, may be used.

Examples of the oxide-based solid electrolytes include garnet-type Li₇La₃Zr₂O₁₂, NASICON-type Li_{1+O}Al_{1+O}Ti_{2-O}(PO₄)₃ and Li₁₊ₚAl₁₊ₚGe₂₋ₚ(PO₄)₃, and perovskite-type Li_{3q}La_{2/3-q}TiO₃.

Among these solid electrolytes, the sulfide-based solid electrolytes containing Li and P are more preferable since they have high lithium ion conductivity. The argyrodite-type solid electrolyte is further preferable since they have higher lithium ion conductivity and are chemically stable.

Particularly preferable examples of the argyrodite-type solid electrolyte such as Li₆PS₅Cl are represented by general composition formula (1), general composition formula (2), or general composition formula (3) below.

Li₇₋ₖPS₆₋ₖXₖ (1)

In general composition formula (1), X indicates at least one kind of halogen element and 0.2 < k < 2.0.

Li_{7-x+y}PS₆₋ₓCl_{x+y} (2)

In general composition formula (2), 0.05 ≤ y ≤ 0.9 and -3.0x + 1.8 ≤ y ≤ -3.0x + 5.7.

Li₇₋ₐPS₆₋ₐCl_{b}Br_{c} (3)

In general composition formula (3), a = b + c, 0 < a ≤ 1.8, and 0.1 ≤ b/c ≤ 10.0.

The average particle size of the solid electrolyte is preferably 0.1 µm or more, and more preferably 0.2 µm or more, from the viewpoint of reduction of the grain boundary resistivity. On the other hand, the average particle size of the solid electrolyte is preferably 10 µm or less, more preferably 5 µm or less, and even more preferably 1 µm or less, from the viewpoint of formation of a sufficient contact interface between the active material and the solid electrolyte.

The content of the solid electrolyte in the positive electrode mixture is preferably 10 parts by mass or more, and more preferably 15 parts by mass or more, with respect to 100 parts by mass of the content of the positive electrode active material, from the viewpoint of further improving the ion conductivity in the positive electrode, thereby further improving the output characteristics of the all-solid-state battery. However, an excessively large amount of the solid electrolyte in the positive electrode mixture decreases the amounts of other components, and the effects of these components may decrease. Therefore, the content of the solid electrolyte in the positive electrode mixture is preferably 65 parts by mass or less, and more preferably 60 parts by mass or less, with respect to 100 parts by mass of the content of the positive electrode active material.

The thickness of the molded body of the positive electrode mixture or the thickness of the positive electrode mixture layer is preferably 0.2 mm or more, more preferably 0.5 mm or more, and even more preferably 0.7 mm or more, while it is preferably 2 mm or less, more preferably 1.7 mm or less, and even more preferably 1.5 mm or less.

For the positive electrode, a current collector can be used. Examples of the positive electrode current collector include: metal substrates such as a metal foil, a punched metal, a net, an expanded metal, and a foamed metal substrate; and a carbon sheet such as a carbon nonwoven fabric. The thickness of the positive electrode current collector is preferably 50 to 1500 µm. In the case where the positive electrode current collector is formed of a metal, the metal is preferably one that does not react to corrode in the battery, and an alloy (Ni-Cr alloy) having the same composition as that described above is more preferably used as a component of the porous metal substrate.

Among such current collectors, a foamed metal substrate is used preferably because of its higher current collection efficiency. Examples of the foamed metal substrate that can be used for the current collector include "Celmet (registered trademark)" manufactured by Sumitomo Electric Industries, Ltd., as described above. In the case where the current collector is formed of a foamed metal substrate, at least a part of the positive electrode mixture (positive electrode mixture layer) penetrates into the voids, so that the contact area between the current collector and the positive electrode mixture layer becomes larger and the resistance of the positive electrode can be made lower.

That is, the positive electrode preferably has a foamed metal substrate as a current collector, and at least a part of the positive electrode mixture is filled in the voids of the foamed metal substrate. More specifically, it is preferable in the foamed metal substrate as a positive electrode current collector, at least a part thereof including an end portion closer to the positive electrode mixture layer is embedded in the surface layer portion of the positive electrode mixture layer and integrated with the positive electrode mixture layer.

Since the thickness of such a metal substrate is usually reduced by compression during production of the positive electrode together with the positive electrode mixture, the thickness before use in the positive electrode is larger than the thickness in the positive electrode. For example, the thickness of the foamed metal substrate before compression is preferably 0.1 mm or more, more preferably 0.3 mm or more, and particularly preferably 0.5 mm or more, while it is preferably 3 mm or less, more preferably 2 mm or less, and particularly preferably 1.5 mm or less. The foamed metal substrate is compressed in the thickness direction when a positive electrode is manufactured through a step of pressurizing the positive electrode mixture and the metal substrate in a method of manufacturing an electrode stacked body described later, for example, and thus, the value of the thickness will be a value as described later.

The porosity and the weight per square meter of the foamed metal substrate before compression may be set in the same ranges as in the case of the conductive connection member described above.

In the case of a positive electrode, which has a foamed metal substrate as a current collector, and at least a part of the metal substrate including an end portion closer to the positive electrode mixture layer is embedded in the surface layer portion of the positive electrode mixture layer and integrated with the positive electrode mixture layer, the thickness of the portion of the metal substrate embedded in the positive electrode mixture layer is preferably 10% or more, and more preferably 20% or more of the thickness of the metal substrate from the viewpoint of more reliably integrating the metal substrate and the positive electrode mixture layer. (The thickness of the metal substrate indicates a thickness of the entire metal substrate, and includes the thickness of the part where the positive electrode mixture layer is also present. Hereinafter, this holds true for the thickness of the foamed metal substrate of the positive electrode unless otherwise specified.)

In a positive electrode having a foamed metal substrate as a current collector, and at least a part of the metal substrate including an end portion on the side of the positive electrode mixture layer is embedded in the surface layer of the positive electrode mixture layer and integrated with the positive electrode mixture layer, it is desirable that the end portion (hereinafter may be referred to as surface-side end portion) of the metal substrate opposite to the positive electrode mixture layer is not embedded in the positive electrode mixture layer and that the end portion (surface of the positive electrode) of the positive electrode is composed of the metal substrate so that the resistance at the time of bringing the metal substrate into contact with a conductive path (or a conductive connection member) in the exterior body of the all-solid-state battery can be reduced. That is, for example, according to the method of manufacturing the electrode stacked body described later, in manufacturing the positive electrode through the step of pressurizing the positive electrode mixture and the metal substrate, it is desirable that the metal substrate is compressed in the thickness direction, the voids at the surface-side end portions of the metal substrate are crushed and eliminated, and only the metal substrate is exposed to the surface of the positive electrode. On the other hand, a part of the voids at the surface-side end portion of the metal substrate may remain as voids without being crushed, or may be filled with the positive electrode mixture. Alternatively, a part of the electrode mixture may be exposed to the surface of the positive electrode together with the surface-side end portion of the metal substrate as long as the contact resistance with the conductive path is not greatly affected. That is, as long as the surface-side end portion of the foamed metal substrate can be exposed to the electrode surface, the entire metal substrate (100% of the thickness of the metal substrate) may be embedded in the surface layer portion of the positive electrode mixture layer. Since the positive electrode mixture is filled in the voids of the metal substrate up to the surface of the positive electrode, the integration of the positive electrode mixture layer and the metal substrate can be made more reliable.

FIG. 4 is an SEM photograph for explaining a state of a surface of an electrode having a metal substrate as a current collector. (The SEM photograph shown in FIG. 4 is not a photograph of the surface of the positive electrode of the all-solid-state battery of the present invention, but a photograph of a positive electrode having the same surface condition as that of the positive electrode of the all-solid-state battery of the present invention, and is shown only for the purpose of explaining the surface condition of the positive electrode of the all-solid-state battery of the present invention.) On the surface of the positive electrode shown in FIG. 4, the end portion of the metal substrate 122 of the positive electrode is exposed. A part of the positive electrode mixture 121a is also exposed on the surface of the electrode since it penetrates into the voids in the end portion of the metal substrate.

However, as the ratio (area ratio) of the positive electrode mixture exposed on the surface of the positive electrode increases, the contact resistance between the metal substrate and the conductive path (or conductive connection member) of the exterior body increases. Therefore, the ratio of the area of the exposed positive electrode mixture on the positive electrode surface is preferably 50% or less, more preferably 25% or less, even more preferably 15% or less, and particularly preferably 10% or less in a plan view.

In a positive electrode having a metal substrate as a current collector, when at least a part of the metal substrate is embedded in the surface layer portion of the positive electrode mixture layer, the thickness of the metal substrate is preferably 1% or more, more preferably 2% or more, and particularly preferably 3% or more of the thickness of the entire positive electrode mixture layer, from the viewpoint of more reliably integrating the metal substrate and the positive electrode mixture layer. (The thickness of the entire positive electrode mixture layer includes the thickness of the part overlapping with the metal substrate. Hereinafter, "thickness of positive electrode mixture layer" indicates the "thickness of entire positive electrode mixture layer" unless otherwise specified.)

The thickness of the metal substrate is preferably 30% or less, more preferably 20% or less, and particularly preferably 10% or less of the thickness of the positive electrode mixture layer from the viewpoint of enhancing the filling property of the positive electrode mixture layer in the positive electrode.

In the positive electrode having the metal substrate as a current collector, the thickness of the metal substrate is preferably 10 µm or more, more preferably 20 µm or more, and particularly preferably 30 µm or more, while it is preferably 300 µm or less, more preferably 200 µm or less, and particularly preferably 100 µm or less.

The thickness of the metal substrate and the thickness of the electrode mixture layer (positive electrode mixture layer and negative electrode mixture layer) in the electrodes (positive electrode and negative electrode) described in the Description are determined by the maximum value of the width in the thickness direction of a region in which the metal substrate can be confirmed and a region in which the electrode mixture (positive electrode mixture and negative electrode mixture) can be confirmed in an image obtained by observing a section in the thickness direction of the electrode by SEM at a magnification of 50 to 1000×. The thickness of the part of the metal substrate, namely, a part embedded in the electrode mixture layer (positive electrode mixture layer and negative electrode mixture layer) is determined from the maximum value of the width in the thickness direction of a part of overlapped regions, i.e., a region where the metal substrate can be identified and a region where the electrode mixture can be identified (the values in the embodiments described below are obtained by these methods).

The ratio (area ratio) of the positive electrode mixture exposed on the surface of the positive electrode is determined by the ratio (A/B) of the total area A of the portion where the positive electrode mixture is exposed and the area B of the entire positive electrode in an image obtained by observing the surface of the positive electrode by SEM at a magnification of 50 to 200×. (The values in Examples described below are obtained by this method.)

The positive electrode can be manufactured by pressurizing the positive electrode mixture to mold a molded body (pellet or the like) of the positive electrode mixture and bonding the molded body to the current collector as necessary, or it can be manufactured by pressurizing the positive electrode mixture and the current collector at a time such that molding of the positive electrode mixture and integrating with the current collector can be performed simultaneously. Alternatively, it can be manufactured by applying a composition containing the positive electrode mixture, which is prepared by dispersing the positive electrode mixture in a solvent, to the current collector, drying the composition, and pressurizing the composition as necessary.

As the solvent of the positive electrode mixture-containing composition, it is preferable to select a solvent that is unlikely to degrade the solid electrolyte. In particular, since the sulfide-based solid electrolyte and the hydride-based solid electrolyte may cause a chemical reaction in the presence of a minute amount of water, use of nonpolar aprotic solvents represented by hydrocarbon solvents is preferred where the examples of the hydrocarbon solvent include hexane, heptane, octane, nonane, decane, decalin, toluene, and xylene. A super-dehydrated solvent that contains 0.001 mass% (10 ppm) or less of water is further preferable. Further, fluorine-based solvents such as "Vertrel (registered trademark)" manufactured by Du Pont-Mitsui Fluorochemicals Co., Ltd., "ZEORORA (registered trademark)" manufactured by Zeon Corporation, and "Novec (registered trademark)" manufactured by Sumitomo 3M Limited, and also non-aqueous organic solvents such as dichloromethane and diethyl ether can be used.

### (Negative electrode)

As the negative electrode constituting the electrode stacked body, for example, a molded body (pellet or the like) formed by molding a negative electrode mixture containing a negative electrode active material or a structure having a layer formed of a negative electrode mixture (negative electrode mixture layer) on one or both sides of a current collector can be used. Alternatively, a negative electrode prepared by using metallic lithium or lithium-aluminum alloy foil as it is or a negative electrode having metallic lithium or lithium-aluminum alloy foil and a current collector can be used.

Examples of the negative electrode active material in the negative electrode having the negative electrode mixture include a carbon material such as graphite, a lithium titanium oxide (such as lithium titanate), a simple substance and a compound (such as an oxide) that contain elements such as Si or Sn, and an alloy thereof. Lithium metals and lithium alloys (such as a lithium-aluminum alloy and a lithium-indium alloy) also can be used as the negative electrode active material.

The content of the negative electrode active material in the negative electrode mixture is preferably 40 to 80 mass% from the viewpoint of increasing the energy density of the all-solid-state battery in which an electrode is used as the negative electrode.

The negative electrode mixture may contain a conductive assistant. Specific examples of the conductive assistant include the above-exemplified conductive assistants that can be contained in the positive electrode mixture. The content of the conductive assistant in the negative electrode mixture is preferably 10 to 30 parts by mass with respect to 100 parts by mass of the content of the negative electrode active material.

The negative electrode mixture may contain a binder. Specific examples of the binder include the above-exemplified binders that can be contained in the positive electrode mixture. It may not be necessary to add a binder to the negative electrode mixture in the case where a favorable moldability can be ensured for forming a molded body of the negative electrode mixture or a negative electrode mixture layer without using a binder, such as the case where a sulfide-based solid electrolyte is contained in the negative electrode mixture.

When it is necessary to contain a binder in the negative electrode mixture, the content of the binder is preferably 15 mass% or less, where it is preferably 0.5 mass% or more. In the case where moldability can be ensured without a binder, the content of a binder in the negative electrode mixture is preferably 0.5 mass% or less, more preferably 0.3 mass% or less, and even more preferably 0 mass% (that is, the negative electrode mixture is free of a binder).

The negative electrode mixture may contain a solid electrolyte. Examples of solid electrolytes to be contained in the negative electrode mixture include the same sulfide-based solid electrolytes, hydride-based solid electrolytes, halide-based solid electrolytes, and oxide-based solid electrolytes previously exemplified as being suitably contained in the positive electrode mixture. Among these solid electrolytes, sulfide-based solid electrolytes are preferred due to their high lithium-ion conductivity, sulfide-based solid electrolytes containing Li and P are more preferred, and argyrodite solid electrolytes are even more preferred due to their higher lithium-ion conductivity and chemical stability. It is particularly preferable that these electrolytes be represented by the general composition formula (1), the general composition formula (2), or the general composition formula (3).

The average particle size of the solid electrolyte of the negative electrode mixture is preferably 0.1 µm or more, and more preferably 0.2 µm or more, while it is preferably 10 µm or less, and more preferably 5 µm or less, for the same reason as that for the positive electrode mixture.

The content of the solid electrolyte in the negative electrode mixture is preferably 30 parts by mass or more, and more preferably 35 parts by mass or more, with respect to 100 parts by mass of the content of the negative electrode active material, from the viewpoint of further increasing the ion conductivity in the negative electrode and further improving the output characteristics of the battery. However, an excessive amount of the solid electrolyte in the negative electrode mixture decreases the amounts of other components and may decrease the effects of these components. Thus, the content of the solid electrolyte in the negative electrode mixture is preferably 130 parts by mass or less, and more preferably 110 parts by mass or less, with respect to 100 parts by mass of the content of the negative electrode active material.

The thickness of the molded body or the negative electrode mixture layer at the negative electrode is preferably 0.2 mm or more, more preferably 0.5 mm or more, and even more preferably 0.7 mm or more, while it is preferably 2 mm or less, more preferably 1.7 mm or less, and even more preferably 1.5 mm or less.

For the negative electrode, a current collector can be used. Examples of the negative electrode current collector include: metal substrates such as a metal foil, a punched metal, a net, an expanded metal, and a foamed metal substrate; and a carbon sheet such as a carbon nonwoven fabric. The thickness of the negative electrode current collector is preferably 50 to 1500 µm. In the case where the negative electrode current collector is formed of a metal, the metal is preferably one that does not react to corrode in the battery, and an alloy (an alloy containing Ni and Cr) having the same composition as that described above is more preferably used as a component of the porous metal substrate.

A detailed description for the manufacture of the negative electrode current collector and the negative electrode will be omitted since they can be manufactured in the same manner as the positive electrode current collector and the positive electrode described above.

### (Solid electrolyte layer)

Specific examples of the solid electrolytes constituting the solid electrolyte layer of the electrode stacked body include the same solid electrolytes exemplified above as the solid electrolytes that can be contained in the positive electrode mixture. Among the exemplified solid electrolytes, a sulfide-based solid electrolyte is preferably used because it has high lithium ion conductivity and a function of improving moldability. It is more preferable to use a sulfide-based solid electrolyte having an argyrodite crystal structure, and it is more preferable to use a solid electrolyte represented by the general composition formula (1), the general composition formula (2) or the general composition formula (3).

The solid electrolyte layer can be formed by a method of compressing the solid electrolyte by pressure molding or the like. Alternatively, it can be formed by a method of: applying a composition for forming a solid electrolyte layer to a substrate, a positive electrode or a negative electrode, where the composition is prepared by dispersing the solid electrolyte in a solvent, followed by drying of the composition; and performing pressure-molding, such as pressing, as necessary.

The solid electrolyte layer may contain a binder such as an acrylic resin or a fluororesin to maintain the shape.

The solid electrolyte layer may also have a porous body such as a resin nonwoven fabric as a supportive body. In this case, a solid electrolyte sheet having the supportive body is obtained.

As for the solvent used for the composition for the solid electrolyte layer, it is desirable to select a solvent that is similar to a solvent to be used for the composition for a positive electrode mixture and is unlikely to degrade the solid electrolyte, and it is preferable to use various solvents exemplified above as the solvent for the composition containing the positive electrode mixture, and it is particularly preferable to use a super dehydrated solvent with a water content of 0.001 mass% (10 ppm) or less.

The thickness of the solid electrolyte layer is preferably 10 to 200 µm.

### (Method of manufacturing electrode stacked body)

The method of manufacturing an electrode stacked body is not particularly limited, but the electrode stacked body can be manufactured by a manufacturing method including, for example, the following steps 1 to 3. The following description refers to a step of using a foamed metal substrate as the current collector.

In the first step, an electrode mixture (positive electrode mixture or negative electrode mixture) is charged into a mold and pressure-molded. The surface pressure of the pressure-molding in the first step is preferably, for example, 30 to 500 MPa.

In the following second step, a foamed metal substrate is placed on the electrode mixture that is pressure-molded in the first step, and in the following third step, the electrode mixture and the metal substrate are pressurized. By the pressurization in the third step, the electrode mixture is further compressed while the metal substrate is embedded in the electrode mixture from the end portion located closer to the electrode mixture, and the metal substrate is compressed in the thickness direction to integrate the electrode mixture layer (positive electrode mixture layer or negative electrode mixture layer) and the metal substrate to form an electrode (positive electrode or negative electrode).

As described above, in the third step, the metal substrate is compressed in the thickness direction. The degree of compression is that the thickness of the metal substrate after compression is preferably 30% or less of the thickness before compression, more preferably 20% or less, and particularly preferably 10% or less, from the viewpoint of ensuring bonding between the metal substrate and the electrode mixture layer. In addition, from the viewpoint of retaining a certain amount of the electrode mixture in the voids of the metal substrate to increase bonding strength between the metal substrate and the electrode mixture layer, the thickness of the metal substrate after compression in the third step is preferably 1% or more, and more preferably 2% or more, of the thickness before compression.

The surface pressure during pressurization in the third step is preferably 800 MPa or more, for example, more preferably 1000 MPa or more, and particularly preferably 1200 MPa or more, in order to sufficiently increase the density of the electrode mixture layer by compressing and molding the electrode mixture. The upper limit of the surface pressure at the time of pressurization in the third step is not particularly specified, but in typical pressurization equipment, the upper limit value is usually about 2000 MPa.

After the first to the third steps, it is possible to obtain an electrode (positive electrode or negative electrode) having a configuration in which at least a part of the metal substrate, including the end portion closer to the electrode mixture layer (a predetermined area in the thickness direction from the end of the metal substrate) is embedded in the surface layer portion of the electrode mixture layer and integrated with the electrode mixture layer, and the other end portion of the metal substrate is exposed on the surface of the electrode.

If the surface pressure during pressurization in the third step becomes high, cracks may occur when the metal substrate is compressed. However, even in the case where the metal substrate is cut and fragments are generated, if the end portions of these fragments are exposed on the electrode surface, a reduction in contact resistance can be achieved.

A positive electrode and a negative electrode are produced through the first step, the second step and the third step, disposed on both surfaces of the solid electrolyte layer, and pressurized as necessary, so that an electrode stacked body can be formed.

Prior to the first step, a preliminary step of introducing a solid electrolyte into the mold and pressure-molding may be performed further. An electrode mixture (positive electrode mixture or negative electrode mixture) is placed on the solid electrolyte that is pressure-molded in the preliminary step, and then, the first step, the second step, and the third step are sequentially performed to manufacture an integrated product of the solid electrolyte layer and the electrode (positive electrode or negative electrode), whereby the electrode stacked body can be manufactured.

The surface pressure at the time of pressure-molding in the preliminary step is preferably 30 to 120 MPa, for example.

Alternatively, an electrode stacked body can be manufactured by sequentially performing the first step, the second step, and the third step for forming either a positive electrode or a negative electrode on one surface of a solid electrolyte layer, and further by performing the first step, the second step, and the third step for forming the other electrode (a negative electrode or a positive electrode) on the other surface of the solid electrolyte layer.

### <Exterior body>

Examples of exterior body to be used for all-solid-state batteries include: a battery container having a recessed container (exterior container) and a sealing body (cap) as shown in FIG. 1; a flat (e.g., coin-shaped, button-shaped) or tubular (e.g., cylindrical, rectangular) battery container having a metal exterior can and a metal sealing body; and a battery container including a laminate film exterior body formed of a metal laminate film such as aluminum laminate film.

In the case of a battery container having a recessed container and a sealing body as shown in FIG. 1, the recessed container can be made of ceramics or resin. The sealing body may be made of ceramics, resin or metal (for example, iron-based alloys such as iron-nickel alloys and iron-nickel-cobalt alloys).

In the recessed container, the connection terminal portion and the conductive path for connecting the electrode of the electrode stacked body to the connection terminal portion can be formed of a metal such as manganese, cobalt, nickel, copper, molybdenum, silver, palladium, tungsten, platinum, gold, or an alloy containing these metals.

The recessed container and the sealing body can be sealed by adhering to each other with an adhesive, and in the case of using a metal sealing body, as shown in FIG. 1, a metal (for example, iron-based alloys such as iron-nickel alloys and iron-nickel-cobalt alloys) sealing ring 200 is disposed closer to the sealing body 160 (upper side in the attached drawing) of the side wall 152 of the recessed container 150, so that a part of the side wall portion, the part closer to the sealing body, is formed of metal, and the recessed container and the sealing body can be sealed by welding.

The shape of the exterior body in a plan view may be a circle or a polygon such as a quadrangle (square or rectangle). In the case of the polygonal shape, the corners may be curved.

### (Elastic conductive member)

The elastic conductive member is not particularly limited as long as it functions as a flat spring that presses the electrode stacked body toward the inner bottom surface of the recessed container. Specific examples of the elastic conductive member include: an elastic conductive member having supported portions 211 shaped to correspond to the supporting portions 153 of a recessed container 150, and a flat portion 212 equipped with a spring portion (spring piece) 213, as shown in FIGS. 1 and 3; and an elastic conductive member having a cross-sectional shape with a locking portion shaped to match the supporting portions of a recessed container and a recess for pressing the electrode stacked body.

The elastic conductive member can be formed of a plate made of nickel, iron, copper, chromium, cobalt, titanium, aluminum or an alloy thereof. The metal constituting the elastic conductive member is preferably a stainless steel plate or a stainless steel plate plated with nickel, and more preferably a spring stainless steel such as SUS301-CSP, SUS304-CSP, SUS316-CSP, SUS420J2-CSP, SUS631-CSP, and SUS632J1-CSP in order to facilitate to exhibit its function as a flat spring.

Further, to ensure pressing forces against the electrode stacked body at predetermined levels or higher, the thickness of the metal plate constituting the elastic conductive member is preferably 0.05 mm or more, more preferably 0.07 mm or more, and particularly preferably 0.1 mm or more. On the other hand, to avoid an excessively thick elastic conductive plate that occupies a large volume in the electrode container, and also to facilitate deformation of the elastic conductive plate so that it can easily be locked to the side wall portion of the recessed container, the thickness of the metal plate constituting the elastic conductive plate is preferably 0.5 mm or less, more preferably 0.4 mm or less, and even more preferably 0.3 mm or less.

### Examples

Hereinafter, the present invention is described in detail by way of the Examples. However, it should be noted that Examples given below are not intended to limit the scope of the present invention.

### (Example 1)

A negative electrode mixture was prepared by mixing lithium titanate (Li₄Ti₅O₁₂, negative electrode active material) having an average particle size of 2 µm, a sulfide-based solid electrolyte (Li₆PS₅Cl) having an average particle size of 0.7 µm, and graphene (a conductive assistant) at a mass ratio of 50:41:9.

A positive electrode mixture was prepared by mixing LiCoO₂ (a positive electrode active material) having an average particle size of 5 µm and having a coating layer of LiNbO₃ formed thereon, a sulfide-based solid electrolyte (Li₆PS₅Cl) having an average particle size of 0.7 µm, and graphene at a mass ratio of 65:30.7:4.3.

Next, a powder of a sulfide-based solid electrolyte (Li₆PS₅Cl) having an average particle size of 0.7 µm was poured into a powder-compacting die, and pressure-molding was performed at a surface pressure of 70 MPa using a press machine to form a temporarily molded layer of a solid electrolyte layer. Furthermore, the aforementioned negative electrode mixture was placed on the upper surface of the temporarily molded layer of the solid electrolyte layer, and pressure-molding was performed at a surface pressure of 50 MPa to further form a temporarily molded layer of a negative electrode on the temporarily molded layer of the solid electrolyte layer.

Next, a foamed metal substrate [Celmet (registered trademark) made of Ni-Cr alloy with Ni and Cr contents of 95 mass% and 5 mass%, respectively] manufactured by Sumitomo Electric Industries, Ltd. and cut to a diameter of 7.25 mm (thickness: 1.1 mm, porosity: 98%, weight per square meter: 347 g/m²) was placed as a current collector on the temporarily molded layer of the negative electrode formed on the temporarily molded layer of the solid electrolyte layer, and pressure-molding was performed at a surface pressure of 300 MPa to form an integrated product of the solid electrolyte layer and the negative electrode.

The mold was turned upside down, and then, the positive electrode mixture was placed on the upper surface of the solid electrolyte layer in the mold (opposite to the surface having the negative electrode), and pressure-molding was performed at a surface pressure of 50 MPa to form a temporarily molded layer of the positive electrode on the solid electrolyte layer.

Next, a foamed metal substrate made of a Ni-Cr alloy of the same composition as that used for the negative electrode was cut and placed as a current collector on the temporarily molded layer of the positive electrode formed on the solid electrolyte layer, and pressure-molding was performed at a surface pressure of 1400 MPa to obtain an electrode stacked body.

In the resulting electrode stacked body, the thickness of the negative electrode mixture layer of the negative electrode, the thickness of the metal substrate, and the thickness of the part of the metal substrate embedded in the negative electrode mixture layer of the negative electrode were 1400 µm, 60 µm (5% of the thickness of the metal substrate before use in the negative electrode), and 60 µm (100% of the total thickness of the metal substrate), respectively. The area ratio of the part of the negative electrode mixture exposed on the surface of the negative electrode was 7%.

In the obtained electrode stacked body, the thickness of the positive electrode mixture layer, the thickness of the metal substrate, and the thickness of the part of the metal substrate embedded in the positive electrode mixture layer of the positive electrode were 800 µm, 60 µm (5% of the thickness of the metal substrate before use in the positive electrode) and 60 µm (100% of the total thickness of the metal substrate), respectively. The area ratio of the part of the positive electrode mixture exposed on the surface of the positive electrode was 7%.

A foamed metal substrate made of a Ni-Cr alloy of the same composition as that used for the positive electrode and the negative electrode (that is, the Ni and Cr contents are 95 mass% and 5 mass%, respectively) was cut to a diameter of 7.25 mm and placed on the inner bottom surface of a recessed container having the same structure as that shown in FIGS. 1 and 2, made of ceramics and having a seal ring made of an iron-nickel-cobalt alloy disposed on the upper part of the side wall portion (the depth of the ceramics was 2.5 mm). The metal substrate was brought into contact with the conductive path of the positive electrode as a conductive connection member, and the electrode stacked body was placed on the recessed container with the positive electrode facing downward. Further, an elastic conductive member formed of a stainless steel plate (thickness: 0.2 mm) and having the same shape as those shown in FIGS. 1 and 3 was placed on the negative electrode of the electrode stacked body, so that the supported portions of the elastic conductive member were engaged with the supporting portions of the recessed container. A spring piece of the elastic conductive member was bent toward the negative electrode of the electrode stacked body and further bent so that the tip of the spring piece was directed toward the flat portion. The spring piece was brought into contact with the negative electrode of the electrode stacked body at a position closer to the boundary with the flat portion than the tip portion so as to press the electrode stacked body toward the inner bottom surface of the recessed container. Thereafter, a sealing body formed of an iron-nickel-cobalt alloy plate (thickness: 0.1 mm) was covered on the seal ring of the recessed container, and the battery container was sealed by welding the sealing body and the recessed container (seal ring), thereby obtaining an all-solid-state secondary battery. In the thus obtained all-solid-state secondary battery, as described above, the elastic conductive member was pressing the electrode stacked body toward the inner bottom surface of the recessed container, whereby the electrode stacked body was pressing the conductive connection member formed of the foamed metal substrate. The thickness of the conductive connection member (foamed metal substrate) in the assembled all-solid-state secondary battery was 200 µm.

### (Comparative Example 1)

An all-solid-state secondary battery was manufactured in the same manner as in Example 1, except that the conductive connection member to be placed on the inner bottom surface of the recessed container was changed to a foamed metal substrate (weight per square meter: 330 g/m²) formed of pure Ni containing no Cr.

### (Comparative Example 2)

An all-solid-state secondary battery was manufactured in the same manner as in Comparative Example 1, except that the foamed metal substrate used as the current collector for the positive electrode and the negative electrode was changed to a substrate formed of pure Ni, which was the same as that used as the conductive connection member in Comparative Example 1.

For the all-solid-state secondary batteries in Example and Comparative Examples, constant current charging was performed at a current of 4 mA until the voltage reached 2.6 V, followed by constant voltage charging at a voltage of 2.6 V until the current reached 0.05 mA, and then constant current discharge was performed at a current of 0.4 mA until the voltage reached 1.0 V.

Next, each battery was stored in a thermostatic chamber at 115°C for 28 days. After being taken out and cooled to room temperature, the battery was subjected to constant-current charging, constant-voltage charging, and constant-current discharging under the same conditions as described above, and the discharge capacity after storage was measured.

The battery whose resistance was measured after storage was disassembled, and the presence or absence of corrosion of the current collector and corrosion of the porous metal substrate interposed between the positive electrode and the exterior body of the electrode stacked body were confirmed by SEM.

Table 1 shows the results.

**[Table 1]**

| | Conductive connection member | Current collector | Discharge capacity (mAh) | Corrosion | |
|---|---|---|---|---|---|
| | | | | Conductive connection member | Current collector |
| Example 1 | Ni-Cr alloy (Cr: 5 mass%) | Ni-Cr alloy (Cr: 5 mass%) | 6.1 | Absent | Absent |
| Comparative Example 1 | Ni | Ni-Cr alloy (Cr: 5 mass%) | 5.9 | Present | Absent |
| Comparative Example 2 | Ni | Ni | 5.6 | Present | Present |

In Example 1, both the conductive connection member and the current collector of the battery were formed of a Ni-Cr alloy. This suppressed the increase in resistance caused by corrosion of the substrate, resulting in a larger discharge capacity after storage compared to the battery in Comparative Example 1, where the conductive connection member was made of Ni, and the battery in Comparative Example 2, where both the conductive connection member and the current collector were made of Ni.

In addition, separate from the above, in the case where the substrate for the conductive connection member was changed to an alloy with a composition of Ni: 85% by mass and Cr: 15% by mass, Ni: 75% by mass and Cr: 25% by mass, and Ni: 65% by mass and Cr 35% by mass, all-solid-state secondary batteries were manufactured in the same manner as above and stored at 115°C for 28 days to confirm that no corrosion of the conductive connection member occurred.

Table 2 shows the resistance values of the substrate for each of the above alloy compositions (resistance values of the substrate alone before battery assembly). From the viewpoint of reducing the internal resistance of the battery, it is preferable that the Cr content be 30% by mass or less, more preferably 20% by mass or less, and particularly preferably 10% by mass or less.

**[Table 2]**

| | Conductive connection member | Resistance (Ω•cm²) |
|---|---|---|
| Substrate 1 | Ni-Cr alloy (Cr: 5 mass%) | 59 |
| Substrate 2 | Ni-Cr alloy (Cr: 15 mass%) | 100 |
| Substrate 3 | Ni-Cr alloy (Cr: 25 mass%) | 137 |
| Substrate 4 | Ni-Cr alloy (Cr: 35 mass%) | 166 |
| Substrate 5 | Ni | 15 |

The present invention may be embodied in other forms without departing from the essential characteristics thereof. The embodiments disclosed in the present application are to be considered in all respects as illustrative and not limitative. The scope of the invention is indicated by the appended claims rather than by the foregoing description, and all changes which come within the meaning and range of equivalency of the claims are intended to be embraced therein.

### Industrial Applicability

Though an all-solid-state battery of the present invention is applicable similarly to conventional primary batteries and secondary batteries, it is favorably applicable to articles to be exposed to high temperatures because the battery includes a solid electrolyte instead of an organic electrolyte solution, and thus has an excellent heat resistance.

### Description of Reference Numerals

- 100: All-solid-state battery
- 110: Electrode stacked body
- 120: Positive electrode
- 121: Positive electrode mixture layer
- 122: Positive electrode current collector
- 130: Negative electrode
- 131: Negative electrode mixture layer
- 132: Negative electrode current collector
- 140: Solid electrolyte layer
- 150: Recessed container
- 151: Bottom surface portion
- 152: Side wall portion
- 153: Supporting portion
- 160: Sealing body
- 170: Connection terminal portion
- 171: Conductive path
- 180: Connection terminal portion
- 181: Conductive path
- 190: Porous metal substrate
- 200: Seal ring
- 210: Elastic conductive member
- 211: Supported portion
- 212: Flat portion
- 213: Spring portion (spring piece)
- 213a: Boundary
- 213b: Tip portion

## Claims

1. An all-solid-state battery comprising:
an electrode stacked body comprising a positive electrode, a negative electrode, and a solid electrolyte layer; and
an exterior body sealing the electrode stacked body inside thereof, wherein
the exterior body has a conductive path extending from the inside to the outside,
a porous metal substrate is interposed between the positive electrode and/or the negative electrode and the conductive path of the exterior body,
at least one of the positive electrode, the negative electrode, and the solid electrolyte layer comprises a sulfide-based solid electrolyte,
the porous metal substrate comprises an alloy containing Ni and Cr,
a content of Ni in the alloy is 60 mass% or more, and
a content of Cr in the alloy is 0.1 mass% or more and 40 mass% or less.

2. The all-solid-state battery according to claim 1, wherein the content of Ni in the alloy is 70 mass% or more.

3. The all-solid-state battery according to claim 1, wherein the content of Cr in the alloy is 30 mass% or less.

4. The all-solid-state battery according to claim 1, wherein the sulfide-based solid electrolyte comprises an argyrodite-type solid electrolyte.

5. The all-solid-state battery according to claim 1, wherein a weight per square meter of the porous metal substrate is 600 g/m² or less.
